# EUROPÄISCHE PATENTANMELDUNG

(11) **EP 3 878 591 A1**
(43) Veröffentlichungstag der Anmeldung: **15.09.2021**
(21) Anmeldenummer: 20163061.3
(22) Anmeldetag: 13.03.2020
(51) Int. Cl.: B23K 11/11, B23K 11/30

(54) **ELEKTRODENKAPPENFRÄSEINRICHTUNG UND VERFAHREN ZUM STEUERN DER ELEKTRODENKAPPENFRÄSEINRICHTUNG**

(71) Anmelder: Lutz Precision, K.S., 84104 Bratislava (SK)
(72) Erfinder: FAHNENSTICH, Stefan, Bratislava 841 04 (SK)
(74) Vertreter: Grünecker Patent- und Rechtsanwälte PartG mbB

(57) **Zusammenfassung**

Die Erfindung betrifft eine Elektrodenkappenfräseinrichtung zum Kappenfräsen von Elektrodenkappen einer Schweißzange eines Schweißroboters, mit einem Kappenfräser und einer Steuer- und Messvorrichtung (3), die computerlesbare Instruktionen umfasst, die, wenn sie durch einen Prozessor der Steuer- und Messvorrichtung (3) ausgeführt werden, die Steuer- und Messvorrichtung (3) veranlassen, ein Drehmoment des Kappenfräsers (2) während eines Fräsvorgangs zu messen und das gemessene Drehmoment für eine erste Steuerung des Kappenfräsers (2) zu verwenden. Weiter betrifft die Erfindung ein Verfahren zum Steuern der Elektrodenkappenfräseinrichtung.

## Beschreibung

Die vorliegende Erfindung betrifft eine Elektrodenkappenfräseinrichtung gemäß dem Oberbegriff des Anspruchs 1 und ein Verfahren zum Steuern der Elektrodenkappenfräseinrichtung gemäß Anspruch 10.

### Stand der Technik

Um Fremdmaterial von der Oberfläche einer Elektrodenkappe, das sich bei Schweißvorgängen dort anlagert, zu entfernen, ist es bekannt, die Oberfläche der Elektrodenkappe in gewissen Abständen zu fräsen. Die Oberfläche der Elektrodenkappe kann durch ein Drücken der Elektrodenkappe gegen eine sich drehenden Schneide gefräst werden.

DE 100 16 148 B4 offenbart einen Elektrodenkappenfräser mit integrierter Spanausblaseinrichtung, insbesondere zum Kappenfräsen von Schweißkappen einer Schweißzange eines Schweißroboters im Automobilbau, mit einem Kappenfräser, einem Elektromotor, der den Kappenfräser antreibt, und einer Spanausblaseinrichtung, die die beim Fräsen anfallenden Späne mit Druckluft ausbläst, wobei die Druckluft für die Spanausblaseinrichtung vom Elektromotor selbst erzeugbar ist, dadurch gekennzeichnet, dass auf der Welle des Elektromotors eine Erzeugungseinrichtung für die Druckluft angeordnet und der Erzeugungseinrichtung nachgeschaltet ein Druckluftspeicher vorgesehen ist.

### Aufgabe

Ausgehend vom bekannten Stand der Technik besteht die zu lösende technische Aufgabe darin, eine Elektrodenkappenfräseinrichtung und ein Verfahren zum Steuern der Elektrodenkappenfräseinrichtung anzugeben, mit denen ein optimiertes Kappenfräsen von Schweißkappen einer Schweißzange eines Schweißroboters, beispielsweise im Automobilbau, möglich ist.

### Lösung

Diese Aufgabe wird erfindungsgemäß durch die Elektrodenkappenfräseinrichtung gemäß Anspruch 1 und das Verfahren zum Steuern der Elektrodenkappenfräseinrichtung gemäß Anspruch 10 gelöst. Weitere Ausführungsformen und Weiterbildungen sind in den abhängigen Ansprüchen erfasst.

Die erfindungsgemäße Elektrodenkappenfräseinrichtung zum Kappenfräsen von Elektrodenkappen einer Schweißzange eines Schweißroboters umfasst einen Kappenfräser und eine Steuer- und Messvorrichtung, die computerlesbare Instruktionen umfasst, die, wenn sie durch einen Prozessor der Steuer- und Messvorrichtung ausgeführt werden, die Steuer- und Messvorrichtung veranlassen, ein Drehmoment des Kappenfräsers während eines Fräsvorgangs zu messen und das gemessene Drehmoment für eine erste Steuerung des Kappenfräsers zu verwenden.

Das gemessene Drehmoment lässt Rückschlüsse auf die Fräsleistung einer Schneide des Kappenfräsers zu. Beispielsweise ist bei einer verminderter Fräsleistung der Schneide, beispielsweise aufgrund von Ablagerungen auf der Schneide, verringerter Schärfe/Güte der Schneide, ein größeres Drehmoment zum Fräsen einer Elektrodenkappe erforderlich.

Ein größeres Drehmoment kann jedoch die Komponenten des Kappenfräsers belasten, was zu Schäden und/oder einer kürzeren Lebensdauer führen kann.

Die Elektrodenkappe kann eine Punktschweißelektrode sein.

Die Steuer- und Messvorrichtung kann weitere computerlesbare Instruktionen umfassen, die, wenn sie durch den Prozessor der Steuer- und Messvorrichtung ausgeführt werden, die Steuer- und Messvorrichtung veranlassen, einen Spanfluss während eines Fräsvorgangs zu messen, beispielsweise durch eine Messung einer abgesaugten Gewichtsmenge an Spänen pro Zeiteinheit, und den gemessenen Spanfluss für eine zweite Steuerung des Kappenfräsers zu verwenden.

Durch eine Messung der abgesaugten Gewichtsmenge an Spänen pro Zeiteinheit kann ermittelt werden, wieviel Material von einer Elektrodenkappe mittels des Kappenfräsers pro Zeiteinheit abgetragen wird.

Die Steuer- und Messvorrichtung kann weitere computerlesbare Instruktionen umfassen, die, wenn sie durch den Prozessor der Steuer- und Messvorrichtung ausgeführt werden, die Steuer- und Messvorrichtung veranlassen, eine Güte einer Schneide, die vom Kappenfräser umfasst wird, zu ermitteln, beispielsweise mittels einer optischen Inspektion der Schneide, beispielsweise nach einem Fräsvorgang, und die ermittelte Güte für eine dritte Steuerung des Kappenfräsers zu verwenden.

Eine Schneide kann mit einem Farbstoff beaufschlagt sein, der je nach Grad einer Abnutzung der Schneide abgetragen sein kann.

Die Steuer- und Messvorrichtung kann weitere computerlesbare Instruktionen umfassen, die, wenn sie durch den Prozessor der Steuer- und Messvorrichtung ausgeführt werden, die Steuer- und Messvorrichtung veranlassen, eine Größe von abgefrästen Späne und eine Gewichtsmenge der abgefrästen Späne während oder nach einem Fräsvorgang zu messen und die gemessene Größe der abgefrästen Späne und die gemessene Gewichtsmenge für eine vierte Steuerung des Kappenfräsers zu verwenden.

Die Größe von abgefrästen Späne kann einen Hinweis auf eine Güte des Fräsvorgangs sein; bei kleineren Spänen kann eine glattere Oberfläche der Elektrodenkappe erhalten werden, wobei bei größeren Spänen Unebenheiten in der Oberfläche der Elektrodenkappe erzeugt werden können. Die Gewichtsmenge der abgefrästen Späne kann einen Hinweis darauf geben, ob alles Fremdmaterial von der Oberfläche der Elektrodenkappe entfernt wurde.

Die Steuer- und Messvorrichtung kann weitere computerlesbare Instruktionen umfassen, die, wenn sie durch den Prozessor der Steuer- und Messvorrichtung ausgeführt werden, die Steuer- und Messvorrichtung veranlassen, eine Anzahl von Fräsvorgängen pro Elektrodenkappe zu messen und die gemessene Anzahl von Fräsvorgängen für eine fünfte Steuerung des Kappenfräsers zu verwenden.

Aus der Anzahl von Fräsvorgängen kann abgeschätzt werden, wieviel Material die Elektrodenkappe bei Fräsvorgängen bereits verloren hat und ob ein Fräsen der Elektrodenkappe noch sinnvoll ist oder nicht.

Die Steuer- und Messvorrichtung kann weitere computerlesbare Instruktionen umfassen, die, wenn sie durch den Prozessor der Steuer- und Messvorrichtung ausgeführt werden, die Steuer- und Messvorrichtung veranlassen, eine Zeit seit einem letzten Wechsel einer Elektrodenkappe zu messen und die gemessene Zeit für eine sechste Steuerung des Kappenfräsers zu verwenden.

Für die Elektrodenkappe kann eine Anzahl von Fräsvorgängen und/oder ein Materialabtrag für diese Zeit ermittelt werden, beispielsweise durch ein Abschätzen von durchschnittlich durchgeführten Fräsvorgängen und durchschnittlich abgetragenem Material.

Die Steuer- und Messvorrichtung kann weitere computerlesbare Instruktionen umfassen, die, wenn sie durch den Prozessor der Steuer- und Messvorrichtung ausgeführt werden, die Steuer- und Messvorrichtung veranlassen, eine Anzahl von Schweißpunkten zu speichern, für die eine Elektrodenkappe, die von dem Kappenfräser gefräst werden soll, bereits eingesetzt wurde und die gespeicherte Anzahl von Schweißpunkten für eine siebte Steuerung des Kappenfräsers zu verwenden.

Aus der Anzahl von Schweißpunkten kann abgeschätzt werden, wieviel Material die Elektrodenkappe bei Schweißvorgängen bereits verloren hat und ob ein Fräsen der Elektrodenkappe noch sinnvoll ist oder nicht.

Die Steuer- und Messvorrichtung kann weitere computerlesbare Instruktionen umfassen, die, wenn sie durch den Prozessor der Steuer- und Messvorrichtung ausgeführt werden, die Steuer- und Messvorrichtung veranlassen, mindestens eines der folgenden kontaktlos zu übermitteln, beispielsweise mittels einer Nahfeldkommunikation oder einem zweidimensionalen Code:
- das gemessene Drehmoment;
- den gemessenen Spanfluss;
- die ermittelte Güte;
- die gemessene Größe der abgefrästen Späne und die gemessene Gewichtsmenge;
- die gemessene Anzahl von Fräsvorgängen;
- die gemessene Zeit;
- die gemessene Anzahl von Schweißpunkten.

Die Nahfeldkommunikation (NFC) kann ein auf der RFID-Technik basierender internationaler Übertragungsstandard zum kontaktlosen Austausch von Daten per elektromagnetischer Induktion mittels loser gekoppelter Spulen über kurze Strecken von wenigen Zentimetern sein.

Der zweidimensionale Code kann ein QR® (Quick Response) Code sein.

Die Steuer- und Messvorrichtung kann weitere computerlesbare Instruktionen umfassen, die, wenn sie durch den Prozessor der Steuer- und Messvorrichtung ausgeführt werden, die Steuer- und Messvorrichtung veranlassen, mindestens eines der folgenden zu speichern, beispielsweise in einem Speicher der Steuer- und Messvorrichtung:
- das gemessene Drehmoment;
- den gemessenen Spanfluss;
- die ermittelte Güte;
- die gemessene Größe der abgefrästen Späne und die gemessene Gewichtsmenge;
- die gemessene Anzahl von Fräsvorgängen;
- die gemessene Zeit.

In dem erfindungsgemäßen Verfahren zum Steuern einer Elektrodenkappenfräseinrichtung zum Kappenfräsen von Schweißkappen einer Schweißzange eines Schweißroboters, wie oben oder weiter unten beschrieben, wobei die Elektrodenkappenfräseinrichtung einen Kappenfräser und eine Steuer- und Messvorrichtung umfasst, wobei die Steuer- und Messvorrichtung computerlesbare Instruktionen umfasst, die, wenn sie durch einen Prozessor der Steuer- und Messvorrichtung ausgeführt werden, wird die Steuer- und Messvorrichtung veranlasst, die folgenden Schritte auszuführen:
Messen eines Drehmoments des Kappenfräsers während eines Fräsvorgangs und Verwenden des gemessenen Drehmoments für eine erste Steuerung des Kappenfräsers.

Die Steuer- und Messvorrichtung kann weiter computerlesbare Instruktionen umfassen, die, wenn sie durch einen Prozessor der Steuer- und Messvorrichtung ausgeführt werden, die Steuer- und Messvorrichtung veranlassen die folgenden Schritte auszuführen:
Messen eines Spanflusses während eines Fräsvorgangs, beispielsweise durch eine Messung einer abgesaugten Gewichtsmenge an Spänen pro Zeiteinheit, und Verwenden des gemessenen Spanflusses für eine zweite Steuerung des Kappenfräsers.

Die Steuer- und Messvorrichtung kann weiter computerlesbare Instruktionen umfassen, die, wenn sie durch einen Prozessor der Steuer- und Messvorrichtung ausgeführt werden, die Steuer- und Messvorrichtung veranlassen die folgenden Schritte auszuführen:
Ermitteln einer Güte einer Schneide, die vom Kappenfräser umfasst wird, beispielsweise mittels einer optischen Inspektion der Schneide, beispielsweise nach einem Fräsvorgang, und Verwenden der ermittelten Güte für eine dritte Steuerung des Kappenfräsers.

Die Steuer- und Messvorrichtung kann weiter computerlesbare Instruktionen umfassen, die, wenn sie durch einen Prozessor der Steuer- und Messvorrichtung ausgeführt werden, die Steuer- und Messvorrichtung veranlassen die folgenden Schritte auszuführen:
Messen einer Größe von abgefrästen Späne und einer Gewichtsmenge der abgefrästen Späne während oder nach einem Fräsvorgang und Verwenden der gemessenen Größe der abgefrästen Späne und der gemessenen Gewichtsmenge für eine vierte Steuerung des Kappenfräsers.

Die Steuer- und Messvorrichtung kann weiter computerlesbare Instruktionen umfassen, die, wenn sie durch einen Prozessor der Steuer- und Messvorrichtung ausgeführt werden, die Steuer- und Messvorrichtung veranlassen die folgenden Schritte auszuführen:
Messen einer Anzahl von Fräsvorgängen pro Elektrodenkappe und Verwenden der gemessenen Anzahl von Fräsvorgängen für eine fünfte Steuerung des Kappenfräsers.

Die Steuer- und Messvorrichtung kann weiter computerlesbare Instruktionen umfassen, die, wenn sie durch einen Prozessor der Steuer- und Messvorrichtung ausgeführt werden, die Steuer- und Messvorrichtung veranlassen die folgenden Schritte auszuführen:
Messen einer Zeit seit einem letzten Wechsel einer Elektrodenkappe und Verwenden der gemessenen Zeit für eine sechste Steuerung des Kappenfräsers.

Die Steuer- und Messvorrichtung kann weiter computerlesbare Instruktionen umfassen, die, wenn sie durch einen Prozessor der Steuer- und Messvorrichtung ausgeführt werden, die Steuer- und Messvorrichtung veranlassen die folgenden Schritte auszuführen:
Speichern einer Anzahl von Schweißpunkten, für die eine Elektrodenkappe, die von dem Kappenfräser gefräst werden soll, bereits eingesetzt wurde und Verwenden der gespeicherten Anzahl von Schweißpunkten für eine siebte Steuerung des Kappenfräsers.

Die Steuer- und Messvorrichtung kann weiter computerlesbare Instruktionen umfassen, die, wenn sie durch einen Prozessor der Steuer- und Messvorrichtung ausgeführt werden, die Steuer- und Messvorrichtung veranlassen die folgenden Schritte auszuführen:
- mindestens eines der folgenden kontaktlos zu übermitteln, beispielsweise mittels einer Nahfeldkommunikation oder einem zweidimensionalen Code:
   - das gemessene Drehmoment;
   - den gemessenen Spanfluss;
   - die ermittelte Güte;
   - die gemessene Größe der abgefrästen Späne und die gemessene Gewichtsmenge;
   - die gemessene Anzahl von Fräsvorgängen;
   - die gemessene Zeit;
   - die gemessene Anzahl von Schweißpunkten.

Die Steuer- und Messvorrichtung kann weiter computerlesbare Instruktionen umfassen, die, wenn sie durch einen Prozessor der Steuer- und Messvorrichtung ausgeführt werden, die Steuer- und Messvorrichtung veranlassen die folgenden Schritte auszuführen:
- mindestens eines der folgenden zu speichern, beispielsweise in einem Speicher der Steuer- und Messvorrichtung:
   - das gemessene Drehmoment;
   - den gemessenen Spanfluss;
   - die ermittelte Güte;
   - die gemessene Größe der abgefrästen Späne und die gemessene Gewichtsmenge;
   - die gemessene Anzahl von Fräsvorgängen;
   - die gemessene Zeit.

### Kurze Figurenbeschreibung

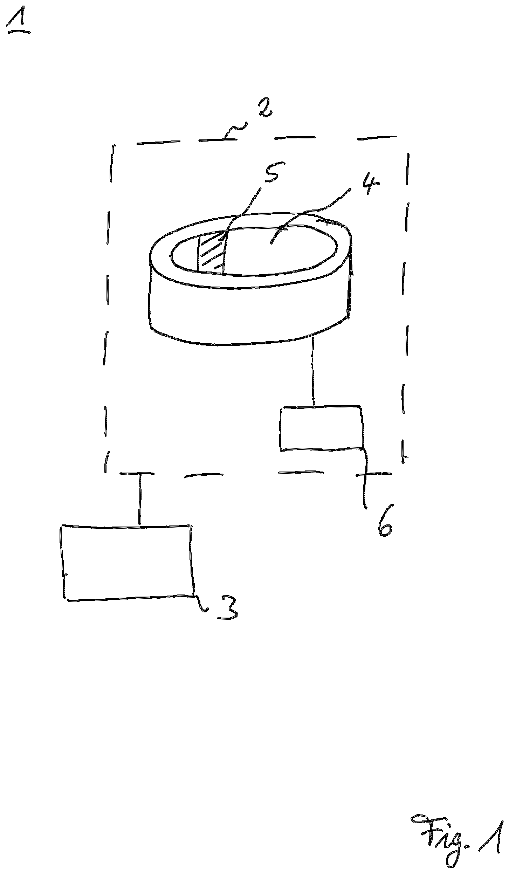

Die beigefügte Figur 1 stellt beispielhaft zum besseren Verständnis und zur Veranschaulichung Aspekte und Ausführungsformen der Erfindung dar. Die Figur 1 zeigt eine schematische Ansicht einer Elektrodenkappenfräseinrichtung.

### Ausführliche Beschreibung

Die Figur 1 zeigt eine Elektrodenkappenfräseinrichtung 1, die einen Kappenfräser 2 und eine Steuer- und Messvorrichtung 3 umfasst. Der Kappenfräser 2 umfasst einen Antrieb 6, mit dem beispielsweise eine Drehung um eine Achse ausgeführt werden kann, so dass mit einer Schneide 5 des Kappenfräsers Späne von einer Elektrodenkappe abgenommen werden können, die in eine Ausnehmung 4 des Kappenfräsers 2 eingebracht worden ist.

Mittels der Steuer- und Messvorrichtung 3 kann ein Drehmoment des Kappenfräsers 2 während eines Fräsvorgangs gemessen, ein Spanfluss während eines Fräsvorgangs gemessen, eine Güte einer Schneide 5 ermittelt, eine Größe der abgefrästen Späne und eine Gewichtsmenge gemessen, eine Anzahl von Fräsvorgängen pro Elektrodenkappe gemessen und/oder eine Zeit seit einem letzten Wechsel einer Elektrodenkappe gemessen werden. Zudem oder alternativ kann die Steuer- und Messvorrichtung 3 eine Anzahl von Schweißpunkten speichern, für die eine Elektrodenkappe bereits eingesetzt wurde.

Die Messergebnisse und/oder das Speicherergebnis können von der Steuer- und Messvorrichtung 3 jeweils für eine Steuerung des Kappenfräsers 2 verwendet werden.

## Patentansprüche

1. Elektrodenkappenfräseinrichtung (1) zum Kappenfräsen von Elektrodenkappen einer Schweißzange eines Schweißroboters, mit einem Kappenfräser (2) und einer Steuer- und Messvorrichtung (3), die computerlesbare Instruktionen umfasst, die, wenn sie durch einen Prozessor der Steuer- und Messvorrichtung (3) ausgeführt werden, die Steuer- und Messvorrichtung (3) veranlassen:
ein Drehmoment des Kappenfräsers (2) während eines Fräsvorgangs zu messen und
das gemessene Drehmoment für eine erste Steuerung des Kappenfräsers (2) zu verwenden.

2. Die Elektrodenkappenfräseinrichtung nach Anspruch 1, wobei die Steuer- und Messvorrichtung (3) weitere computerlesbare Instruktionen umfasst, die, wenn sie durch den Prozessor der Steuer- und Messvorrichtung (3) ausgeführt werden, die Steuer- und Messvorrichtung (3) veranlassen:
einen Spanfluss während eines Fräsvorgangs zu messen, beispielsweise durch eine Messung einer abgesaugten Gewichtsmenge an Spänen pro Zeiteinheit, und
den gemessenen Spanfluss für eine zweite Steuerung des Kappenfräsers (2) zu verwenden.

3. Die Elektrodenkappenfräseinrichtung nach Anspruch 1 oder 2, wobei die Steuer- und Messvorrichtung (3) weitere computerlesbare Instruktionen umfasst, die, wenn sie durch den Prozessor der Steuer- und Messvorrichtung (3) ausgeführt werden, die Steuer- und Messvorrichtung (3) veranlassen:
eine Güte einer Schneide (5), die vom Kappenfräser (2) umfasst wird, zu ermitteln, beispielsweise mittels einer optischen Inspektion der Schneide (5), beispielsweise nach einem Fräsvorgang, und
die ermittelte Güte für eine dritte Steuerung des Kappenfräsers (2) zu verwenden.

4. Die Elektrodenkappenfräseinrichtung nach einem der Ansprüche 1 bis 3, wobei die Steuer- und Messvorrichtung (3) weitere computerlesbare Instruktionen umfasst, die, wenn sie durch den Prozessor der Steuer- und Messvorrichtung (3) ausgeführt werden, die Steuer- und Messvorrichtung (3) veranlassen:
eine Größe von abgefrästen Späne und eine Gewichtsmenge der abgefrästen Späne während oder nach einem Fräsvorgang zu messen und
die gemessene Größe der abgefrästen Späne und die gemessene Gewichtsmenge für eine vierte Steuerung des Kappenfräsers (2) zu verwenden.

5. Die Elektrodenkappenfräseinrichtung nach einem der Ansprüche 1 bis 4, wobei die Steuer- und Messvorrichtung (3) weitere computerlesbare Instruktionen umfasst, die, wenn sie durch den Prozessor der Steuer- und Messvorrichtung (3) ausgeführt werden, die Steuer- und Messvorrichtung (3) veranlassen:
eine Anzahl von Fräsvorgängen pro Elektrodenkappe zu messen und
die gemessene Anzahl von Fräsvorgängen für eine fünfte Steuerung des Kappenfräsers (2) zu verwenden.

6. Die Elektrodenkappenfräseinrichtung nach einem der Ansprüche 1 bis 5, wobei die Steuer- und Messvorrichtung (3) weitere computerlesbare Instruktionen umfasst, die, wenn sie durch den Prozessor der Steuer- und Messvorrichtung (3) ausgeführt werden, die Steuer- und Messvorrichtung (3) veranlassen:
eine Zeit seit einem letzten Wechsel einer Elektrodenkappe zu messen und
die gemessene Zeit für eine sechste Steuerung des Kappenfräsers (2) zu verwenden.

7. Die Elektrodenkappenfräseinrichtung nach einem der Ansprüche 1 bis 6, wobei die Steuer- und Messvorrichtung (3) weitere computerlesbare Instruktionen umfasst, die, wenn sie durch den Prozessor der Steuer- und Messvorrichtung (3) ausgeführt werden, die Steuer- und Messvorrichtung (3) veranlassen:
eine Anzahl von Schweißpunkten zu speichern, für die eine Elektrodenkappe, die von dem Kappenfräser gefräst werden soll, bereits eingesetzt wurde und
die gespeicherte Anzahl von Schweißpunkten für eine siebte Steuerung des Kappenfräsers (2) zu verwenden.

8. Die Elektrodenkappenfräseinrichtung nach einem der Ansprüche 1 bis 7, wobei die Steuer- und Messvorrichtung (3) weitere computerlesbare Instruktionen umfasst, die, wenn sie durch den Prozessor der Steuer- und Messvorrichtung (3) ausgeführt werden, die Steuer- und Messvorrichtung (3) veranlassen:
- mindestens eines der folgenden kontaktlos zu übermitteln, beispielsweise mittels einer Nahfeldkommunikation oder einem zweidimensionalen Code:
- das gemessene Drehmoment;
- den gemessenen Spanfluss;
- die ermittelte Güte;
- die gemessene Größe der abgefrästen Späne und die gemessene Gewichtsmenge;
- die gemessene Anzahl von Fräsvorgängen;
- die gemessene Zeit;
- die gemessene Anzahl von Schweißpunkten.

9. Die Elektrodenkappenfräseinrichtung nach einem der Ansprüche 1 bis 8, wobei die Steuer- und Messvorrichtung (3) weitere computerlesbare Instruktionen umfasst, die, wenn sie durch den Prozessor der Steuer- und Messvorrichtung (3) ausgeführt werden, die Steuer- und Messvorrichtung (3) veranlassen:
- mindestens eines der folgenden zu speichern, beispielsweise in einem Speicher der Steuer- und Messvorrichtung (3):
- das gemessene Drehmoment;
- den gemessenen Spanfluss;
- die ermittelte Güte;
- die gemessene Größe der abgefrästen Späne und die gemessene Gewichtsmenge;
- die gemessene Anzahl von Fräsvorgängen;
- die gemessene Zeit.

10. Verfahren zum Steuern einer Elektrodenkappenfräseinrichtung zum Kappenfräsen von Schweißkappen einer Schweißzange eines Schweißroboters nach einem der Ansprüche 1 bis 9, wobei der Elektrodenkappenfräseinrichtung einen Kappenfräser und eine Steuer- und Messvorrichtung (3) umfasst, wobei die Steuer- und Messvorrichtung (3) computerlesbare Instruktionen umfasst, die, wenn sie durch einen Prozessor der Steuer- und Messvorrichtung (3) ausgeführt werden, die Steuer- und Messvorrichtung (3) veranlassen die folgenden Schritte auszuführen:
Messen eines Drehmoments des Kappenfräsers (2) während eines Fräsvorgangs und
Verwenden des gemessenen Drehmoments für eine erste Steuerung des Kappenfräsers (2).

11. Das Verfahren nach Anspruch 10, wobei die Steuer- und Messvorrichtung (3) weiter computerlesbare Instruktionen umfasst, die, wenn sie durch einen Prozessor der Steuer- und Messvorrichtung (3) ausgeführt werden, die Steuer- und Messvorrichtung (3) veranlassen die folgenden Schritte auszuführen:
Messen eines Spanflusses während eines Fräsvorgangs, beispielsweise durch eine Messung einer abgesaugten Gewichtsmenge an Spänen pro Zeiteinheit, und
Verwenden des gemessenen Spanflusses für eine zweite Steuerung des Kappenfräsers (2).

12. Das Verfahren nach Anspruch 10 oder 11, wobei die Steuer- und Messvorrichtung (3) weiter computerlesbare Instruktionen umfasst, die, wenn sie durch einen Prozessor der Steuer- und Messvorrichtung (3) ausgeführt werden, die Steuer- und Messvorrichtung (3) veranlassen die folgenden Schritte auszuführen:
Ermitteln einer Güte einer Schneide (5), die vom Kappenfräser (2) umfasst wird, beispielsweise mittels einer optischen Inspektion der Schneide (5), beispielsweise nach einem Fräsvorgang, und
Verwenden der ermittelten Güte für eine dritte Steuerung des Kappenfräsers (2).

13. Das Verfahren nach einem der Ansprüche 10 bis 12, wobei die Steuer- und Messvorrichtung (3) weiter computerlesbare Instruktionen umfasst, die, wenn sie durch einen Prozessor der Steuer- und Messvorrichtung (3) ausgeführt werden, die Steuer- und Messvorrichtung (3) veranlassen die folgenden Schritte auszuführen:
Messen einer Größe von abgefrästen Späne und einer Gewichtsmenge der abgefrästen Späne während oder nach einem Fräsvorgang und
Verwenden der gemessenen Größe der abgefrästen Späne und der gemessenen Gewichtsmenge für eine vierte Steuerung des Kappenfräsers (2).

14. Das Verfahren nach einem der Ansprüche 10 bis 13, wobei die Steuer- und Messvorrichtung (3) weiter computerlesbare Instruktionen umfasst, die, wenn sie durch einen Prozessor der Steuer- und Messvorrichtung (3) ausgeführt werden, die Steuer- und Messvorrichtung (3) veranlassen die folgenden Schritte auszuführen:
Messen einer Anzahl von Fräsvorgängen pro Elektrodenkappe und
Verwenden der gemessenen Anzahl von Fräsvorgängen für eine fünfte Steuerung des Kappenfräsers (2).

15. Das Verfahren nach einem der Ansprüche 10 bis 14, wobei die Steuer- und Messvorrichtung (3) weiter computerlesbare Instruktionen umfasst, die, wenn sie durch einen Prozessor der Steuer- und Messvorrichtung (3) ausgeführt werden, die Steuer- und Messvorrichtung (3) veranlassen die folgenden Schritte auszuführen:
Messen einer Zeit seit einem letzten Wechsel einer Elektrodenkappe und
Verwenden der gemessenen Zeit für eine sechste Steuerung des Kappenfräsers (2).

16. Das Verfahren nach einem der Ansprüche 10 bis 15, wobei die Steuer- und Messvorrichtung (3) weiter computerlesbare Instruktionen umfasst, die, wenn sie durch einen Prozessor der Steuer- und Messvorrichtung (3) ausgeführt werden, die Steuer- und Messvorrichtung (3) veranlassen die folgenden Schritte auszuführen:
Speichern einer Anzahl von Schweißpunkten, für die eine Elektrodenkappe, die von dem Kappenfräser gefräst werden soll, bereits eingesetzt wurde und
Verwenden der gespeicherten Anzahl von Schweißpunkten für eine siebte Steuerung des Kappenfräsers (2).

17. Das Verfahren nach einem der Ansprüche 10 bis 16, wobei die Steuer- und Messvorrichtung (3) weiter computerlesbare Instruktionen umfasst, die, wenn sie durch einen Prozessor der Steuer- und Messvorrichtung (3) ausgeführt werden, die Steuer- und Messvorrichtung (3) veranlassen die folgenden Schritte auszuführen:
- mindestens eines der folgenden kontaktlos zu übermitteln, beispielsweise mittels einer Nahfeldkommunikation oder einem zweidimensionalen Code:
- das gemessene Drehmoment;
- den gemessenen Spanfluss;
- die ermittelte Güte;
- die gemessene Größe der abgefrästen Späne und die gemessene Gewichtsmenge;
- die gemessene Anzahl von Fräsvorgängen;
- die gemessene Zeit;
- die gemessene Anzahl von Schweißpunkten.

18. Das Verfahren nach einem der Ansprüche 10 bis 17, wobei die Steuer- und Messvorrichtung (3) weiter computerlesbare Instruktionen umfasst, die, wenn sie durch einen Prozessor der Steuer- und Messvorrichtung (3) ausgeführt werden, die Steuer- und Messvorrichtung (3) veranlassen die folgenden Schritte auszuführen:
- mindestens eines der folgenden zu speichern, beispielsweise in einem Speicher der Steuer- und Messvorrichtung (3):
- das gemessene Drehmoment;
- den gemessenen Spanfluss;
- die ermittelte Güte;
- die gemessene Größe der abgefrästen Späne und die gemessene Gewichtsmenge;
- die gemessene Anzahl von Fräsvorgängen;
- die gemessene Zeit.
